# EUROPEAN PATENT APPLICATION

(11) **EP 4 653 283 A1**
(43) Date of publication of application: **26.11.2025**
(21) Application number: 24305818.7
(22) Date of filing: 24.05.2024
(51) Int. Cl.: B61D 37/00, B60N 3/00

(54) **TABLE FOR VEHICLE AND ASSOCIATED VEHICLE**

(71) Applicant: SpeedInnov, 75008 Paris (FR)
(72) Inventor: LOUMEAUD, Arnaud, 17430 TONNAY CHARENTE (FR); LANOE, Stéphane, 17000 LA ROCHELLE (FR)
(74) Representative: Plasseraud IP

(57) **Abstract**

A table (12) for a vehicle. The table comprises a table board (14) comprising a top face (14A) perpendicular to a height axis (Z) and a bottom face (14B), the top face and the bottom face being delimitated by a front edge (16) of the table board. The table also comprises a railing (20) extending parallel to and along the front edge of the table board. According to the invention, the railing (20) is located above the top face (14A) of the table board (14), along the height axis (Z), and a thickness (T12) of the table (12), measured along the height axis from the bottom face to the railing (20), is comprised between 30 mm and 40 mm.

## Description

The present invention concerns a table for a vehicle and an associated vehicle.

In public transport vehicles, for example in rail vehicles, it is known to provide handholds and railings to help people with reduced mobility, such as people in wheelchairs, to move around the vehicle. Standards therefore require vehicles to be fitted with such gripping devices.

For example, European Standard EN 16585-2 of April 2017 describes the specific design requirements for use by people with reduced mobility applying to rail vehicles and stipulates that gripping devices must be positioned at least every two meters.

A known solution to comply with this standard in bar car (also known as buffet car or café car) of rail vehicles is to equip existing tables with railing extending from a front edge of the table board of the table, or tabletop, the railing being parallel to the front edge. Such railing are usually levelled with the table board, i.e. the railing is placed in front of the front edge, which is not aesthetically pleasing. In addition, because European Standard EN 16585-2 of April 2017 specify that the thickness of the gripping devices must be comprised between 30 mm and 40 mm, such railing are bulky.

The invention aims to offer an improved table for a vehicle complying with European Standard EN 16585-2 of April 2017.

According to one aspect, the invention relates to a table for a vehicle, the table comprising:
- a table board comprising a top face perpendicular to a height axis and a bottom face, wherein the top face and the bottom face are delimitated by a front edge of the table board, and
- a railing, the railing extending parallel to and along the front edge of the table board.
According to the invention, the railing is located above the top face of the table board, along the height axis, and in that a thickness of the table, measured along the height axis from the bottom face to the railing, is comprised between 30 mm and 40 mm.

An advantage of the invention is that the position of the railing, above the table board, makes the table compliant with European Standard EN 16585-2 of April 2017 because the thickness of the table is comprised between 30 mm and 40 mm thanks to the railing, making it easy to grab the front edge of the table board and the railing together. This allows for a thinner railing, compared to known solutions, which is more aesthetically pleasing. Another surprising advantage of the invention is that the railing also functions as a retaining device, preventing objects placed on the table board from sliding off.

According to advantageous aspects of the invention, the invention may comprise one or more of the following features, considered alone or according to all possible combinations:
- Parallel to the table board, the railing does not protrude beyond the front edge of the table board.
- A distance between the railing and the front edge of the table board, measured perpendicularly to the height axis, is comprised between 10 mm and 35 mm.
- The railing is located at a distance from the table board, along the height axis, and a gap between the table board and the railing, measured along the height axis, is less than or equal to 5 mm.
- The table further comprises fixing pins attaching the railing to the table board.
- The fixing pins are attached to the railing and the fixing pins are fastened to the table board with fasteners that penetrate the table board from the bottom face of the table board, along the height axis.
- Each fixing pins has a threaded hole and the fasteners are screwed into the threaded holes of the fixing pins.
- A thickness of the table board, measured along the height axis, is comprised between 15 mm and 35 mm.
- A thickness of the railing, measured along the height axis, is comprised between 5 mm and 15 mm.

According to another aspect, the invention also relates to a vehicle comprising a table as described here above. This vehicle induces the same advantages as the table mentioned here above.

The invention will be better understood and other advantages thereof will appear more clearly upon reading the following description of an exemplary table and of an exemplary vehicle, provided solely as an example and made in reference to the appended drawings, in which:
[Fig. 1] Figure 1 is a top view of a vehicle according to one embodiment of the invention, equipped with several tables according to one embodiment of the invention.
[Fig. 2] Figure 2 is a perspective view of one of the tables equipping the vehicle of Figure 1.

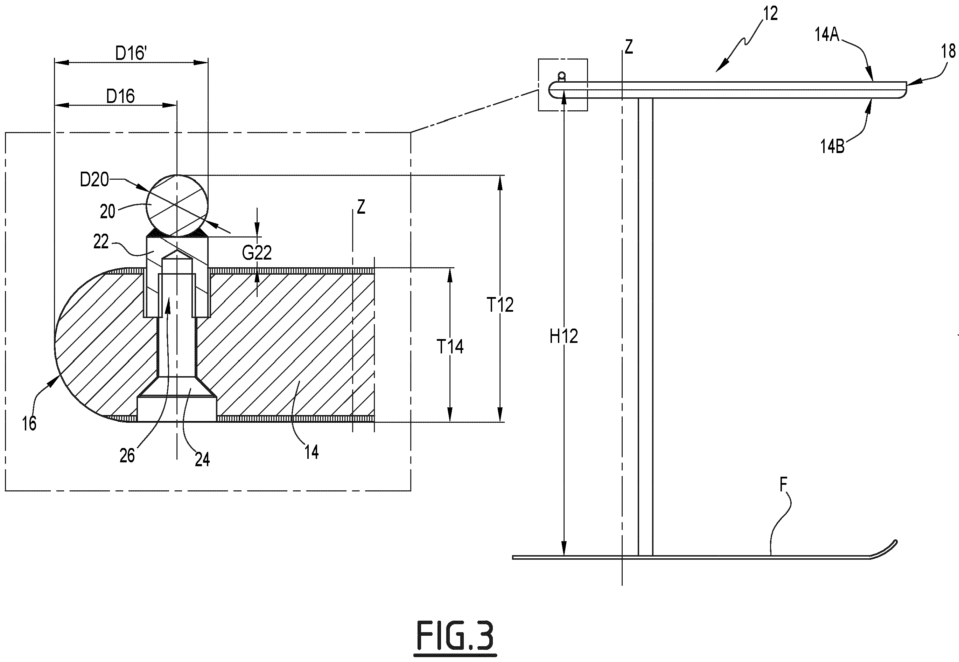

[Fig. 3] Figure 3 is a sectional view of the table of Figure 2, according to the plane III of Figure 2, with a detail view on a larger scale.
[Fig. 4] Figure 4 is similar to the detail view of Figure 3 and illustrates the operation of the table as a gripping device.

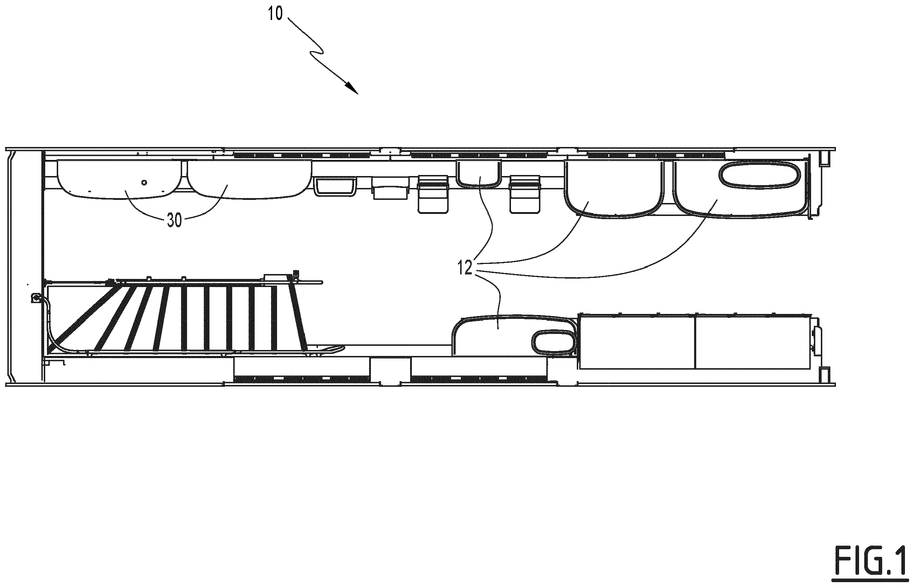

An exemplary vehicle 10 is illustrated in Figure 1. In the example, the vehicle 10 is a rail vehicle, of which only a bar car, also known as buffet car or café car, is represented.

In a variant, not shown, the vehicle 10 is a tramway, or a road vehicle such as a bus, an air transport vehicle such as a plane, or even a sea transport vehicle such as a ferry.

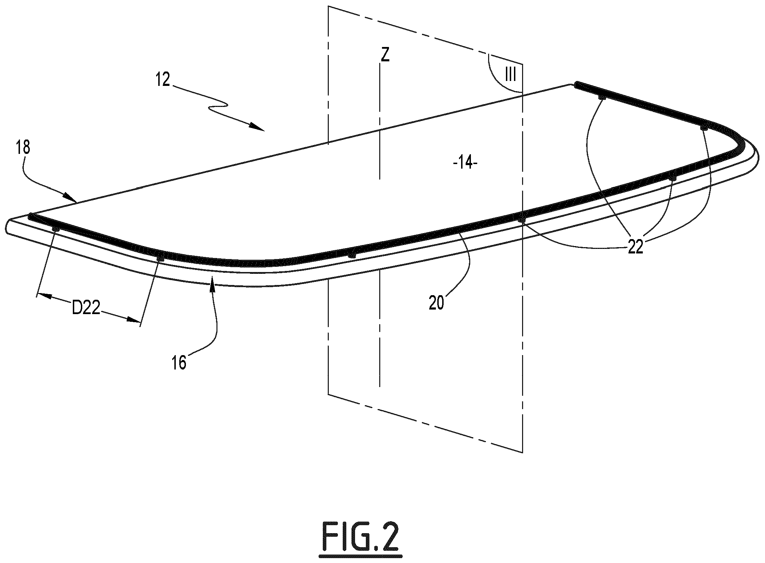

The vehicle 10 comprises four tables 12 according to the invention, one of which is shown in Figure 2. The number of tables 12 can differ from four depending on the configuration of the vehicle 10 and can be, for example, equal to one or two or more than four.

Each table 12 comprises a table board 14, or tabletop, comprising a top face 14A, visible by passengers of the vehicle 10 standing or sitting in the vehicle, and a bottom face 14B, not visible by passengers standing or sitting in the vehicle.

The top face 14A and the bottom face 14B are delimited by a front edge 16 of the table board 14, which is oriented towards the inside of the vehicle 10. Preferably, the front edge 16 is rounded, as represented in the Figures.

In the example, the table board 14 is also delimited by a back edge 18, which is oriented towards a wall, or a structure, of the vehicle 10. Hence, the front edge 16 of the table board 14 is visible by a passenger of the vehicle 10 while the back edge 18 is not.

The top face 14A of the table board 14 extends perpendicular to a height axis Z of the vehicle 10. The top face 14A of the table board 14 is preferably horizontal but in practice, the orientation of the top face 14A can vary depending on the orientation of the vehicle 10. Therefore, the height axis Z is intended to be vertical and is preferably vertical, but its orientation can vary. Hence, the terms "horizontal" and "vertical" are not limitative but are relative and refer to the top face 14A of the table board 14. In particular, the height axis Z is only defined relative to the top face 14A, being perpendicular to the top face 14 regardless of whether it is al or not.

The terms "above", "below", "top" and "bottom" refer to the height axis Z, in the normal operating configuration of the vehicle 10. Hence, below the table board 14 means between the table board and a floor F of the vehicle 10 and above the table board means on the side of the table board opposite to the floor.

In the example, the table board 14 is flat, so that the top face 14A and the bottom face 14B are parallel to each other. Hence, in the example, the table board 14 itself extends perpendicular to the height axis Z.

A height H12 of the table, measured between the floor F of the vehicle 10 and the table board 14 parallel to the height axis Z, is comprised between 800 mm and 1200 mm.

A thickness T14 of the table board 14, measured parallel to the height axis Z, is preferably comprised between 15 mm and 35 mm. In the example, the thickness T14 is equal to 25 mm.

Each table 12 comprises a railing 20 extending parallel to the front edge 16 of the table board 14 and along the front edge. The railing 20 is located above the table board 14, along the height axis Z. Since the railing 20 is located above the table board 14, it is understood that it is located set back from the front edge 16, i.e. that it does not project beyond the table board, perpendicular to the height axis Z. In other words, parallel to the table board 14, the railing 20 does not protrude beyond the front edge 16 of the table board.

In the example, the railing 20 has a circular cross-section with a diameter D20, or thickness, preferably comprised between 5 mm and 15 mm. In the example, the diameter D20 is equal to 10 mm.

In a variant, not shown, the railing 20 has a circular cross-section of a different shape, for example an elliptic shape, a rectangular shape or any polygonal shape. In such a variant, a thickness of the railing 20, that is the largest dimension of the cross-section of the railing, is also preferably comprised between 5 mm and 15 mm.

A distance D16 between the front edge 16 and the railing 20, measured perpendicular to the height axis Z, is comprised between 10 mm and 35 mm. In the example, the distance D16 is equal to 20 mm. The distance D16 is measured between the outermost part of the front edge 16 and the center of the railing 20.

Advantageously, the distance D16 is chosen based on the diameter D20 so that the sum of the distance D16 and half the diameter D20 is less than or equal to 40 mm, i.e. so that a distance D16' between the outermost part of the front edge 16 and the innermost part of the railing 20 is less than or equal to 40 mm. In the example, the distance D16' between the outermost part of the front edge 16 and the innermost part of the railing 20 is equal to 25 mm.

Preferably, the railing 20 is located at a distance from the table board 14, along the height axis Z, so that a gap G22 is formed between the railing 20 and the table board 14. The gap G22 is less than or equal to 5 mm. In the example, the gap G22 is equal to 5 mm.

In the example, the railing 20 is attached to the table board 14 with fixing pins 22, which are regularly arranged along the railing 20 and to which the railing is attached, preferably by welding. The fixing pins 22 protrude from the table board so that the gap G22 corresponds to the height of the protruding portion of the fixing pins 22.

Furthermore, the fixing pins 22 are fastened to the table board 14 with fasteners 24 that penetrate the table board 14 from below, i.e. from the bottom face 14B. More precisely, each fixing pin 22 has a threaded hole 26 and the fasteners 24 penetrate the table board 14 from below and extend through the table board to be screwed into the threaded holes 26 of the fixing pins 22. For example, the fasteners 24 are screws.

Using such fixing pins 22 to attach the railing 20 to the table board 14 is particularly advantageous, because the fixing pins 22 are aesthetically pleasant since the fasteners 24 are not visible from above the table board 14, i.e. on the top face 14A. In other words, the top face 14A of the table board 14, which is the face seen by passengers of vehicle 10, is devoid of visible fastening means.

Preferably, a distance D22 separating two consecutive fixing pins 22, measured along the railing 20, is comprised between 100 mm and 600 mm to securely attach the railing to the table board 14. All consecutive fixing pins are not necessarily separated by a constant distance D22.

As an alternative, not shown, the railing 20 is directly resting onto the table board 14, so that there is no gap between the railing and the table board. Such alternative is particularly relevant with a railing 20 having a rectangular cross-section and laid flat on the table board 14. In such an alternative, the railing 20 can either be directly attached to the table board 14, for example with screws, or indirectly attached to the table board by fixing pins which do not raise the railing relative to the table board.

The thickness T14 of the table board 14, the diameter D20 of the railing 20 and, in the example, the gap G22 between the table board and the railing are chosen so that a thickness T12 of the table 12, measured along the height axis Z and at the railing, is comprised between 30 mm and 40 mm, these values being included. In the example, the thickness T12 of the table 12 is equal to 40 mm. The thickness T12 is, in practice, the apparent thickness of the table 12. In other words, the thickness T12 is measured from the bottom face 14B of the table board 14 to the top of the railing 20, i.e. to a top extremity of the railing, opposed to the top face 14A of the table board, along the height axis Z.

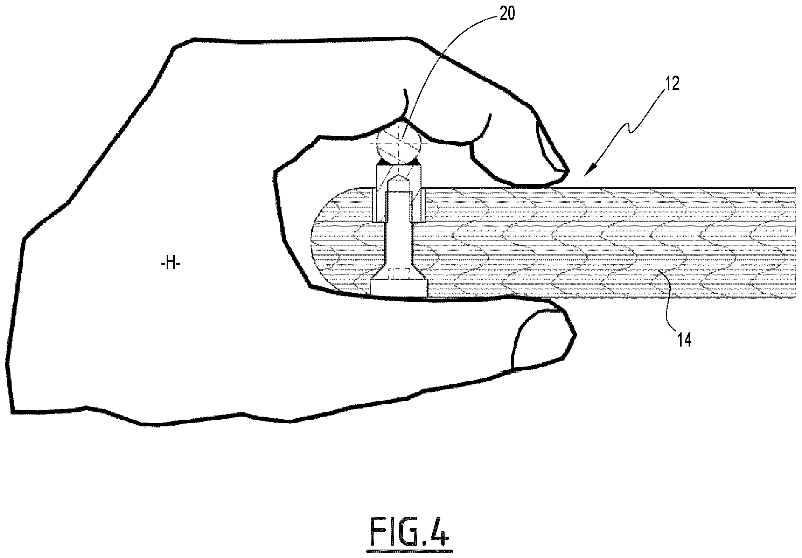

Hence, thanks to the thickness T12 of the table 12 being comprised between 30 mm and 40 mm, the table is considered as a gripping device by the European Standard EN 16585-2 of April 2017. The front edge 16 of the table board 14 and the railing 20, in other words the front portion of the table 12, can therefore easily be grabbed by a passenger of the vehicle 10 with its hand H, as represented in Figure 4, with the thumb underneath the table board 14 and the other fingers on top of the table board. Thanks to the table 12 of the invention, people with reduced mobility, such as people in wheelchairs, can easily move around the vehicle 10.

Furthermore, the distance D16 is advantageously chosen so that the fingers of the hand H of a passenger grabbing the table 12 follow the shape of the railing 20. More precisely, thanks to the distance D16 being comprised between 10 mm and 35 mm, the railing 20 is positioned so as to fall under the phalanges of the hand H and so that the tips of the fingers can easily rest against the top face 14A of the table board 14, ensuring a firm and reliable grip on the table 12. Hence, the distance D16 comprised between 10 mm and 35 mm helps grabbing the table 12.

Practically speaking, the front portion of the table board 14 and the railing 20 combined are functionally equivalent to a railing with a diameter comprised between 30 mm and 40 mm, thus allowing easy and firm gripping of the table 12 by the passengers of the vehicle 10 and therefore enabling the table to be considered as a gripping device by the European Standard EN 16585-2 of April 2017. Thanks to the table 12 and its railing 20, it is therefore possible to comply with this Standard without having to use a bulky railing. Indeed, the railing 20, with its diameter D20 comprised between 5 mm and 15 mm, is thinner than previously known railings.

Moreover, having a gap G22 between the railing 20 and the table board 14 that is less than or equal to 5 mm gives an aesthetically pleasing appearance to table 12 while preventing a passenger of the vehicle from trapping their fingers between the table board and the railing.

In addition to enabling the table 12 to be considered as a gripping device by the European Standard EN 16585-2 of April 2017, the railing 20 acts as a retaining device, preventing objects placed on the table board 14 from sliding off the table. Indeed, objects placed on the table 12 may slide due to the movements of the vehicle 10, but the presence of the railing 20 prevents them from falling off the table.

The height of the railing 20, corresponding to the sum of the gap G22 and the diameter D20, is sufficient to prevent objects such as glasses, bottles and plates, from tipping over and fall off the table 12.

The railing therefore has a dual function, thus resulting in a table 12 that is both improved and more aesthetically pleasing than those previously known.

In the example of Figure 1, the vehicle 10 also comprises tables 30 that are not equipped with a railing.

The features of the embodiment and variants considered in this description can be combined to generate new embodiments of the invention, in the framework of the appended set of claims.

## Claims

1. A table (12) for a vehicle (10), the table comprising:
- a table board (14) comprising a top face (14A) perpendicular to a height axis (Z) and a bottom face (14B), wherein the top face and the bottom face are delimitated by a front edge (16) of the table board, and
- a railing (20), the railing extending parallel to and along the front edge of the table board,
**characterized in that** the railing (20) is located above the top face (14A) of the table board (14), along the height axis (Z), and **in that** a thickness (T12) of the table (12), measured along the height axis from the bottom face to the railing (20), is comprised between 30 mm and 40 mm.

2. The table (14) of claim 1, wherein, parallel to the table board (14), the railing (20) does not protrude beyond the front edge (16) of the table board (14).

3. The table (12) of any one of claims 1-2, wherein a distance (D16) between the railing (20) and the front edge (16) of the table board (14), measured perpendicularly to the height axis (Z), is comprised between 10 mm and 35 mm.

4. The table (12) of any one of claims 1-3, wherein the railing (20) is located at a distance from the table board (14), along the height axis (Z), and wherein a gap (G22) between the table board and the railing, measured along the height axis, is less than or equal to 5 mm.

5. The table (12) of any one of claims 1-4, further comprising fixing pins (22) attaching the railing (20) to the table board (14).

6. The table (12) of claim 5, wherein the fixing pins (22) are attached to the railing (20) and wherein the fixing pins (22) are fastened to the table board (14) with fasteners (24) that penetrate the table board from the bottom face (14B) of the table board, along the height axis (Z).

7. The table (12) of claim 6, wherein each fixing pins (22) has a threaded hole (26) and wherein the fasteners (24) are screwed into the threaded holes of the fixing pins.

8. The table (14) of any one of claims 1-7, wherein a thickness (T14) of the table board (14), measured along the height axis (Z), is comprised between 15 mm and 35 mm.

9. The table (14) of any one of claims 1-8, wherein a thickness (D20) of the railing (20), measured along the height axis (Z), is comprised between 5 mm and 15 mm.

10. A vehicle (10) comprising at least one table (12) according to any one of claims 1-9.
